# EUROPÄISCHE PATENTSCHRIFT

(11) **EP 0 762 999 B1**
(45) Veröffentlichungstag und Bekanntmachung des Hinweises auf die Patenterteilung: **03.06.1998**
(21) Anmeldenummer: 95911217.8
(22) Anmeldetag: 10.03.1995
(51) Int. Cl.: C05F 17/02

(54) **VERFAHRBARE VORRICHTUNG ZUR DURCHARBEITUNG UND/ODER UMSETZUNG VON ANHÄUFUNGEN VON MATERIALIEN (MIETEN) UND DAFÜR VORZUGSWEISE VORGESEHENE RÄUMEINRICHTUNG**
MOBILE DEVICE FOR MIXING AND/OR TURNING HEAPED MATERIALS (CLAMPS) AND CLEARING DEVICE PREFERABLY USED THEREFOR
DISPOSITIF MOBILE POUR LE MALAXAGE ET/OU LE RETOURNAGE DE MATERIAUX (EN MEULES) ET DISPOSITIF D'EVACUATION UTILISE DE PREFERENCE A CET EFFET

(30) Priorität: 13.04.1994 DE 4412637
(43) Veröffentlichungstag der Anmeldung: 19.03.1997
(73) Patentinhaber: Friedrich Backhus Kompost-Technologie, 26188 Edewecht (DE)
(72) Erfinder: BACKHUS, Friedrich, D-26188 Edewecht (DE); GERDES, Stefan, D-26188 Edewecht (DE)
(74) Vertreter: Lauerwald, Jörg, Dipl.-Phys.
(86) Internationale Anmeldenummer: DE9500332
(87) Internationale Veröffentlichungsnummer: WO9528368

(56) Entgegenhaltungen:
- EP-A- 0 346 642
- WO-A-94/01995
- FR-A- 2 356 613
- US-A- 3 858 814

## Beschreibung

Die Erfindung betrifft eine verfahrbare Vorrichtung zur Durcharbeitung und/oder Umsetzung von vorzugsweise wallartig aufgeschütteten Anhäufungen von kompostierbaren Materialien z.B. Mieten oder von deponierbaren Materialien, insbesondere zur organischen Aufbereitung, um-fassend eine auf zwei Fahrspuren verfahrbares Fahrwerk, ein im wesentlichen quer zur Fahrtrichtung innerhalb des Spurzwischenraumes zwischen den Fahrspuren des Fahrwerkes, innerhalb eines Durchlauftunnels für das Material angeordnetes, vorzugsweise rotierend antreibbares Arbeitsorgan und zwei den beiden Fahrspuren des Fahrwerkes in Fahrtrichtung vorgelagerte, etwa die Breite der jeweiligen Fahrspur einnehmende, vor den Fahrspuren befindliches Material in den Spurzwischenraum zwingende Räumeinrichtungen für z.B. Fahrspuren, wobei jede einen Schild umfassende Räumeinrichtung von einer etwa in Fahrtrichtung weisenden Arbeitsstellung in eine Ruhestellung etwa quer zur Fahrtrichtung verschwenkbar und auch anhebbar ist.

Eine Vorrichtung der vorgenannten Gattung, ist aus dem europäischen Patent 0 346 642 bekannt.

Eine gattungsgemäße Vorrichtung dient zur Durcharbeitung von vorzugsweise kompostierbarem Material, welches in Form von einem Wall oder mehreren zueinander parallelen Wällen angehäuft ist. Die Vorrichtung ist in ihrer Vorderansicht, die allerdings im Straßenverkehr die Seitenansicht bildet, im wesentlichen in Form eines mit seiner Öffnung nach unten liegenden Buchstaben C, U oder V ausgebildet, indem nämlich die Vorrichtung auf zwei Fahrspuren verfahrbar ist, wobei die Vorrichtung insgesamt etwa torförmig ausgebildet ist und dabei den Zwischenraum zwischen den Fahrspuren überbrückt, derart, daß die beiden Fahrspuren links und rechts einer wallartigen Anhäufung verlaufen können und verfahren werden können und die wallartige Anhäufung selbst innerhalb des Torbogens durch den Durchlauftunnel verlaufen kann. Zur Durcharbeitung des angehäuften Materials wird die Vorrichtung von einem Ende der wallartigen Anhäufung bis zum anderen Ende verfahren. In dem Durchlauftunnel für die wallartige Anhäufung erstreckt sich quer zur Fahrtrichtung das Arbeitsorgan, welches im wesentlichen als eine um ihre Längsachse rotierend antreibbare Walzenform ausgebildet ist, an deren Außenseite Arbeitswerkzeuge, z.B. Schneckengänge, Zähne, Platten, Flügel oder dergleichen angeordnet sind, die das durchzuarbeitende Material durchmischen, aufwirbeln bzw. aufschleudern und dabei auch entgegen der Fahrtrichtung verlagern, so daß die wallartige Anhäufung durch die Durcharbeitung ihres Materials jeweils um ein bestimmtes Längenmaß längsversetzt wird. Bei kompostierbarem Material dient die Durcharbeitung des Materials insbesondere zur Luftanreicherung, um aerobe Mikroorganismen zu begünstigen und anaerobe Mikroorganismen zu unterdrücken. Mit einer solchen Vorrichtung wird aber durchaus nicht nur reines Schräddermaterial oder dergleichen durchgearbeitet, sondern es können auch andere deponierbare Materialien, z.B. Erden, die mit Fremdkörpern versetzt sein können, durchgearbeitet werden.

Die gattungsgemäße Vorrichtung weist außerdem im Bereich ihrer beiden Fahrspuren Räumeinrichtungen auf, die dem Fahrwerk in den Fahrspurbereichen jeweils vorgelagert sind, um eventuell in den Fahrspuren befindliches oder hineingefallenes Material zur Vermeidung der Verdichtung durch das Fahrwerk (wieder) in den Zwischenraum zwischen den beiden Fahrspuren, also auf die wallartige Anhäufung, zu zwingen. Die bekannte Vorrichtung aus dem zitierten europäischen Patent weist hierzu eine aktive Räumeinrichtung auf, z.B. vor einem Leitschild rotierende Räumwerkzeuge.

Die Räumeinrichtungen der bekannten Vorrichtung sind aus ihrer Arbeitsstellung, in der sie etwa in Fahrtrichtung weisen, wenn sie z.B. beim Manövrieren der Vorrichtung nicht benötigt werden, in eine Ruhestellung verschwenkbar, in der sie etwa quer zur Fahrtrichtung auswärts weisen. Außerdem sind sie anhebbar, um nicht gegen Unebenheiten zu stoßen. Dennoch können sie auch in dieser Ruhestellung das Manövrieren, z.B. das Wenden, der Vorrichtung stören.

Der Erfindung liegt daher die Aufgabe zugrunde, eine Vorrichtung der eingangs genannten Gattung dahingehend weiterzubilden, daß sie besonders kompakt in dem Sinne ausbildbar ist, daß ein möglichst hoher Prozentsatz der Gesamtbreite der Vorrichtung als Arbeitsbreite für das Arbeitsorgan zur Verfügung steht und dennoch auch die Räumeinrichtungen raumsparend von ihrer Arbeitsstellung in eine Ruhestellung verschwenkbar sind, in der sie das Manövrieren der Vorrichtung nicht stören.

Die Aufgabe wird erfindungsgemäß dadurch gelöst, daß jeder als Räumschild ausgebildete Schild in eine Ruhestellung in den Zwischenraum zwischen den Fahrspuren verschwenkbar und dadurch gleichzeitig in die Ruhestellung verschwenkbar und anhebbar ist, daß er beim Verschwenken um einen Winkel bezüglich des Erdbodens derart anstellbar ist, daß er in Richtung seines freien Endes aufragt.

Der Räumschild der erfindungsgemäßen Vorrichtung ist also aus seiner Arbeitsstellung, in der er in Fahrtrichtung weist, in eine Quer-Ruhestellung in den Spurzwischenraum verschwenkbar und gleichzeitig um einen Anstellwinkel anhebbar, so daß die beiden vorhandenen Räumschilde insbesondere beim Manövrieren, z.B. Wenden, der Vorrichtung nicht stören, indem sie weder nach vorne vorragen, was den benötigten Wenderaum der Vorrichtung minimiert, wobei ein Kettenfahrwerk auf der Stelle wenden kann, noch eventuelle Unebenheiten oder Hindernisse stören, da die Räumschilde gleichzeitig hochgeschwenkt sind.

Außerdem sind mit Vorteil die Räumeinrichtungen der erfindungsgemäßen Vorrichtung gegenüber der bekannten, zitierten Vorrichtung wesentlich schmaler, bezogen auf die Arbeitsstellung, ausbildbar, da eine aktive Räumeinrichtung durch eine passive Räumeinrichtung ersetzt wird, indem an Stelle aktiver Räumwerkzeuge und eines Leitschildes nur ein selbst effektiv arbeitsfähiger Räumschild verwendet wird, der keinerlei Raum beanspruchenden Eigenantrieb für die Räumung benötigt. Der Räumschild kann also sehr viel schmaler ausgebildet werden. Dies kann zur Vergrößerung der Arbeitsbreite des Arbeitsorganes ausgenutzt werden, indem auch die Fahrspuren selbst schmaler ausgebildet werden, so daß die Räumschildbreite mit der Fahrspur fluchtet. Eine schmale Ausbildung der Fahrspur ist insbesondere bei Verwendung eines Kettenfahrwerks möglich, weil die Antriebsketten bzw. Fahrketten relativ schmal ausgebildet werden können. Es ist aber auch die Verwendung von Rädern denkbar.

Gemäß bevorzugter Weiterbildungen der erfindungsgemäßen Vorrichtung weist jeder Räumschild eine von seinem freien vorderen Ende nach hinten ansteigende, schaufelartige Rampe zum Anheben des zu räumenden Materials auf, die an ihrer Vorderseite und an ihrer Innenseite offen ist und an ihrer Außenseite und an ihrer Rückseite von einer in ihrem Verlauf von der Außenseite der Rampe im wesentlichen in einem Bogen in eine an der Rückseite querverlaufende, in den Fahrspurzwischenraum weisende und führende Führungsfläche für das Material begrenzt ist. Bevorzugt ist die Rampe des Räumschildes an ihrer Vorderseite derart abgeschrägt, daß sie zu ihrer Außenseite hin zugespitzt ist.

Ein so ausgebildeter Räumschild gräbt sich in Material, das eventuell die Fahrspur versperrt, hebt das Material an und zwingt es auf die wallartige Anhäufung zurück, ist also bezüglich der Arbeitsleistung durchaus aktiv, auch wenn damit auf bewegliche Arbeitswerkzeuge zugunsten einer schmaleren Arbeitsbreite verzichtet werden kann. Der bogenverlauf der Führungsfläche kann durch gerade bzw. ebene, aneinander winkelig angeordnete dem Verlauf eines Vieleckes folgende Teilführungsabschnitte verwirklicht werden, so daß die Führungsfläche relativ einfach und robust aus Metallplatten zusammengesetzt werden kann bzw. die Führungsfläche durch mehrfache Abkantung einer Platte erstellt werden kann.

Ein gleichzeitiges Einschwenken und Hochschwenken der Räumschilde wird bei der erfindungsgemäßen Vorrichtung äußerst raumsparend dadurch erreicht, daß der betroffene Räumschild nur um eine einzige Schwenkachsenwirklinie verschwenkt weroen muß, die gegenüber der Lot-rechten in Fahrtrichtung geneigt ist. Durch diese geneigte Schwenkachse bzw. Schwenkachsenwirklinie ist eine Einschwenken und gleichzeitiges Hochschwenken des Räumschildes automatisch möglich, wobei im wesentlichen nur die entsprechende Schwenkachse benötigt wird und beispielsweise ein ebenfalls kompakt auszubildender und anzuordnender Arbeitszylinder als Betätigungsorgan.

Auch wenn sich die Vorrichtung in Fahrtrichtung vorarbeitet, könnte allerdings ein jeweils in Fahrtrichtung weisender Räumschild auf ein Hindernis stoßen. Um dadurch nicht den Arbeitsablauf zu beeinträchtigen, ist es wünschenswert, daß auch in diesem Falle der Räumschild um einen Anstellwinkel anhebbar ist, was nach einer Weiterbildung der erfindungsgemäßen Vorrichtung der Fall ist.

Auch diese Möglichkeit wird bei der erfindungsgemäßen Vorrichtung mit besonderem Vorteil wieder in einer besonders kompakten, raumsparenden Weise dadurch ermöglicht, daß zur Festlegung der Schwenkachsenwirklinie zum Einschwenken des Räumschildes keine durchgehende Schwenkachse verwendet wird, sondern lediglich zwei miteinander nicht verbundene Anlenkpunkte, von denen einer der Anlenkpunkte, vorzugsweise der obere Anlenkpunkt, gegenüber dem anderen Anlenkpunkt, vorzugsweise dem unteren Anlenkpunkt auf einem Bogen selbst wiederum verschwenkbar ist. Durch diese Verschwenkbarkeit eines der Anlenkpunkte kann das in Fahrtrichtung weisende Räumschild entsprechend angehoben werden, indem die Neigung der Schwenkachsenwirklinie verändert wird. Diese Verschwenkung kann beispielsweise um einen relativ klein auszubildenden Schwenkzapfen oder dergleichen erfolgen. Der nichtschwenkbare Anlenkpunkt kann beispielsweise sehr kompakt als Kugelgelenk ausgebildet sein.

Für die gesamte Anhebbarkeit und Verschwenkbarkeit des Räumschildes sind somit nur zwei bis drei relativ klein auszubildende Befestigungspunkte für das Räumschild notwendig. Dabei kann die Räumeinrichtung insgesamt sehr robust und zuverlässig ausgebildet sein. Vorzugsweise wird vorgesehen, daß das Anheben des Räumschildes in Arbeitsstellung gegen eine Rückstellfederkraft erfolgt, so daß der Räumschild sich immer wieder automatisch nach Überschreiten eines Hindernisses absenkt.

Betätigt wird der anhebbare und verschwenkbare Räumschild vorzugsweise mit ein bis zwei Arbeitszylindern als Betätigungsorganen. Auch diese Betätigungsorgane werden mit besonderem Vorteil bei der erfindungsgemäßen Vorrichtung in der lotrechten Ebene der jeweiligen Fahrspur angeordnet, so daß auch diese Betätigungsorgane keinen Raum einnehmen, der der Arbeitsbreite des Arbeitsorganes verloren gehen könnte. Mit Vorteil wird also der Räumschild selbst möglichst schmal ausgebildet. Die Fahrspur des Fahrwerkes selbst wird entsprechend schmal ausgebildet und die Betätigungsorgane zur Betätigung des Räumschildes werden zudem auch noch in der Ebene dieser schmalen Fahrspur mit untergebracht. Dies ist nach einer Weiterbildung der Erfindung in besonders günstiger Weise dadurch möglich, daß das Fahrwerk für jede Fahrspur eine Antriebskette aufweist und daß Organe des zugeordneten Räumschildes im wesentlichen innerhalb des Umschlingungsbereiches der Antriebskette untergebracht sind.

Ein besonders günstiger Raum steht dafür nach einer Weiterbildung der Erfindung dadurch zur Verfügung, daß jede der beiden Antriebsketten jeweils Kettenbelege aufweisen, die beidseitig über die jeweilige Ketten-breite überstehen und daß die Organe und Elemente zur Betätigung und Anlenkung des dieser Antriebskette vor-geordneten Räumschildes, wenigstens zum Teil, im Umschlingungsbereich des einwärts in den Fahrspurzwischenraum weisenden Überstandes der Kettenbelege untergebracht sind. Dies bedeutet, daß die Kettenbelege höchstens so breit sind, wie der vorgelagerte Räumschild selbst, die eigentliche Antriebskette selbst aber sogar noch schmaler ausgebildet ist, so daß im Umschlingungsbereich der Kettenbelege für die Unterbringung von Organen ein größerer Umschlinungsradius zur Verfügung steht, als im Umschlingungsbereich der Antriebskette selbst.

Es kann also gesagt werden, daß bei der erfindungsgemäßen Vorrichtung jeder Kubikzentimeter des zur Verfügung stehenden Raumes zählt und möglichst für Anordnungen genutzt wird.

Insbesondere die beiden nicht miteinander verbundenen Anlenkpunkte, die die Schwenkachsenwirklinie eines Räumschildes festlegen, können bei Verwendung eines Kettenantriebes mit Vorteil so untergebracht werden, daß der untere Anlenkpunkt zur Festlegung der Schwenkachsenwirklinie des Räumschildes innerhalb der Umschlingung der zugeordneten Antriebskette angeordnet ist, während der obere Anlenkpunkt oberhalb der Umschlingung angeordnet ist, was bei einer durchgehenden Schenkachse nicht möglich wäre, wobei aber diese sozusagen unterbrochene Schwenkachse noch bessere Bewegungsmöglichkeiten des Räumschildes gewährleistet, als eine ununterbrochene Achse.

Auch der Fahrzeugrahmen bzw. Vorrichtungsrahmen der Vorrichtung wird selbst zur Raumersparnis möglichst dünnwandig ausgebildet. Es besteht somit das Risiko, daß der Vorrichtungsrahmen für die in Arbeitsstellung gebrachten Räumschilde kein ausreichendes Widerlager bildet, so daß es zu Verformungen unter Belastung der Räumschilde kommen könnte und zu einem Ausscheren der Räumschilde nach außen, also zu einem auswärts gerichteten Überknicken der Räumschilde. Um dies zu verhindern, sieht die erfindungsgemäße Vorrichtung nach einer Weiterbildung mit Vorteil vor, daß für jeden Räumschild ein Widerlager zusätzlich vorgesehen ist. Vorzugsweise ist jedes Widerlager als ein an der Seitenwandung der Vorrichtung in Fahrtrichtung hinter dem zugeordneten Räumschild angeordnetes, in Fahrtrichtung weisendes Schwert ausgebildet. Zwar wäre es auch möglich, die Wandung des Vorrichtungsrahmen in diesem Bereich in ihrem Material, d.h. in ihrer Dicke, zu verstärken, aber die Verwendung eines Schwertes hat nach einer Weiterbildung der Erfindung den Vorteil, daß das Schwert um dieselbe horizontale, quer zur Fahrtrichtung verlaufende Achswirklinie zum Überqueren von Hindernissen anhebbar ist, wie der zurgeordnete Räumschild. Stößt nämlich der Räumschild auf ein Hindernis und muß deshalb kurzfristig angehoben werden, so wird auch das Schwert, das ebenfalls bis auf die Fahrbahn hinabreichen soll, danach auf das Hindernis treffen, so daß eine Anhebbarkeit des Schwertes ebenfalls vorteilhaft ist. Wenn zudem der Räumschild und das Schwert um dieselbe Achse schwenken, so ist auch bei derartigen Schwenkbewegungen eine optimale Zuordnung zwischen beiden Komponenten gewährleistet. Dazu sind das Schwert und der Räumschild aber nicht miteinander verbunden, so daß der Räumschild dennoch einwärts geschwenkt werden kann, während das Schwert weiterhin in Fahrtrichtung weist, da der eingeschwenkte Räumschild mangels Belastung kein Widerlager benötigt. Der ebenfalls in seinen Materialien möglichst dünn ausgebildete Räumschild kann zum Anschlag an das Schwert in dem entsprechend zugeordneten Bereich durch eine Anschlagsverbreiterung verbreitert sein.

Eine nächste Weiterbildung der Erfindung zeichnet sich dadurch aus, daß das rotierend antreibbare Arbeitsorgan im wesentlichen ein rotierend antreibbares Mantelrohr umfaßt, an dessen Außenseite die Arbeitswerkzeuge angeordnet sind und in dessem Inneren koaxial ein Druckmittelantrieb mit feststehender Welle und rotierendem, den Rohrmantel antreibenden Gehäuse untergebracht ist.

Ebenfalls aus Gründen der Raumersparnis im Bereich des Arbeitsorganes selbst, um eine möglichst große Arbeitsbreite für das Arbeitsorgan gewährleisten zu können, wird mit Vorteil somit bei der erfindungsgemäßen Vorrichtung ein Druckmittelantrieb verwendet, der sich innerhalb des Arbeitsorganes befindet, so daß für diesen Antrieb außerhalb des Arbeitsorganes keinerlei Raum benötigt wird, ebensowenig wie für eventuelle Anschlüsse, Getriebe oder dergleichen. Das einzige, was für einen solchen Druckmittelantrieb noch benötigt wird, ist eine entsprechende Druckmittelversorgung, so daß also bei der Anordnung des Arbeitsorganes am Vorrichtungsrahmen ein entsprechender Anschluß gefunden werden muß.

Dies wird nach einer Weiterbildung der Erfindung ohne wesentlichen Raumbedarf und ohne Störung durch das unmittelbar benachbarte Fahrwerk dadurch erreicht, daß das Arbeitsorgan eine Arbeitsstellung auf Fahrwerksniveau aufweist, wobei der Radius des Mantelrohres so gewählt ist, daß es das Fahrwerk, vorzugsweise die Umschlingungsbereiche von Antriebsketten, nach oben überragt, und daß der Anschlußbereich für die Druckmittelversorgung des im Mantellrohr untergebrachten Druckmittelantriebes in Höhe des Bereiches einer Stirnfläche des Mantelrohres angeordnet ist, der oberhalb des Fahrwerkes liegt.

Für die Wahl des Durchmessers des Mantelrohres, und damit des Arbeitsorganes, ist ein gewisser Spielraum vorhanden, solange der Durchmesser des Arbeitsorganes relativ klein bleibt im Vergleich zur Höhe der wallartigen Anhäufung des durchzuarbeitendes Materials. Das Mantelrohr kann in seinem Durchmesser also ohne weiteres erfindungsgemäß so gewählt werden, daß ein Teil der Stirnfläche das Fahrwerk überragt, so daß genau in diesem überragenden Bereich der Druckmittelanschluß plaziert werden kann, also dort, wo er von der Fahrbewegung nicht gestört wird, insbesondere Druckmittelschläuche oder dergleichen sich nicht verwickeln können.

Der Druckmittelantrieb selbst liegt allerdings zur Vermeidung zusätzlicher Getriebe vorzugsweise koaxial im Mantelrohr, so daß auch das Druckmittel letztendlich in diesem Koaxialbereich des Mantelrohres benötigt wird. Ein Problem besteht also bei der erfindungsgemäßen Vorrichtung darin, das Druckmittel von dem relativ hochliegenden Druckmittelanschluß im Bereich der Periferie des Mantelrohres hinunterzuleiten in den axialen Bereich des Mantelrohres, ohne dafür zusätzlichen Raum zu benötigen oder Komponenten zu benötigen, die dann doch wieder das Fahrwerk oder die Rotation des Arbeitsorganes stören könnten.

Da ein Druckmittelantrieb mit feststehender Welle verwendet wird, die Welle also an der Vorrichtung fest angeordnet werden kann, nutzt eine nächste Weiterbildung der Erfindung mit Vorteil die Befestigung der Welle selbst, um auch den Abstand zwischen dem Druckmittelanschluß und dem Axialbereich des Mantelrohres druckmittelleitend zu überbrücken, indem im Inneren des Mantelrohres als Stirnflächen angeordnete Befestigungsflansche zur Befestigung des Arbeitsorganes an der Vorrichtung, von denen wenigstens einer der Befestigungsflansche wenigstens einen Druckmittelkanal aufweist, der einen oberhalb des Fahrwerks befindlichen Druckmittelanschluß mit einer im Mantelrohr etwa axial angeordneten Druckmittelzuleitung des Druckmittelantriebs druckmittelleitend verbindet, vorgesehen ist.

Vorzugsweise sind mehrere Druckmittelkanalabschnitte als Bohrungen ausgeführt, wobei axial verlaufende Bereiche sogar noch als Schraubenlöcher für Befestigungsschrauben zur Befestigung des Flansches am Druckmittelantrieb (mit-)genutzt sind.

Da das Arbeitsorgan auch am Boden liegendes Material erfassen soll und dazu möglichst tief angeordnet ist, kann das Arbeitsorgan ebenfalls auf eventuelle Hindernisse stoßen. Es ist daher eine zusätzliche wünschenswerte Forderung, auch das Arbeitsorgan anheben zu können. Diese weitere Funktionalität des Arbeitsorganes führt natürlich leicht wiederum zu unerwünschtem Raumbedarf.

Diese Forderung wird aber bei einer Weiterentwicklung der erfindungsgemäßen Vorrichtung dadurch erfüllt, daß das Arbeitsorgan zwischen zwei im Bereich der Fahrspuren befindlichen Schwingen angeordnet ist, mit denen es um eine horizontale, zur Fahrtrichtung querverlaufende Achse verschwenkbar ist. Die Schwingen selbst können relativ schmale Platten sein, die bezüglich der Arbeitsbreite des Arbeitsorganes nur sehr wenig zusätzlichen Raum benötigen. Die Befestigungsflansche werden dann vorzugsweise zur Befestigung des Arbeitsorganes an den Schwingen verwendet.

Eine weitere Raumersparnis erfolgt bei einer bevorzugten Ausführungsform der erfindungsgemäßen Vorrichtung dadurch, daß die innenliegenden Seitenwandungen des Vorrichtungsrahmens im Bereich der Befestigungsflansche Ausnehmungen zur Montierung von Befestigungsschrauben zur Befestigung der Befestigungsflansche an den Schwingen von außen durch die Schwingen hindurch aufweisen.

Zur Montierung des Arbeitsorganes kann dieses also beispielsweise von vorne ohne Verkantung in den Durchlauftunnel der Vorrichtung eingeführt werden, bis sich die Stirnflächen des Mantelrohres an den vorgesehenen Befestigungsstellen befinden. Dann werden die Stirnflächen des Arbeitsorganes an den Schwingen befestigt, indem von außen Schrauben durch die Schwingen in die Befestigungsflansche des Arbeitsorganes eingeschraubt werden. Hierzu weisen die Seitenflächen der Vorrichtung Ausnehmungen auf, so daß die Schwingen in diesen Bereichen zur Einbringung der Schrauben freiliegen. Auch das Fahrwerk stört, insbesondere bei Verwendung eines Kettenantriebes nicht, da innerhalb der Umschlingungen der Antriebsketten ein Eingriff möglich ist. Ein solcher Eingriff wäre aber auch beispielsweise zwischen zwei Rädern eines Fahrwerkes möglich. Die Befestigungsflansche sind natürlich vor der Anbringung des Arbeitsorganes in den Durchlauftunnel in die Stirnseiten des Mantelrohres eingesetzt worden und dort unter teilweiser Nutzung der Druckmittelkanäle am Druckmittelantrieb befestigt werden.

Ein Ausführungsbeispiel, aus dem sich weitere erfinderische Merkmale ergeben, ist in der Zeichnung dargestellt. Es zeigen:
Fig. 1 eine Vorderansicht einer erfindungsgemäßen Vorrichtung,
Fig. 2 eine Seitenansicht der Vorrichtung gemäß Fig. 1,
Fig. 3 eine Draufsicht auf die Vorrichtung gemäß den Fig. 1 und 2,
Fig. 4 eine Bewegungsstudie in dem gegenüber Fig. 2 vergrößerten und detaillierteren Bereich der Räumeinrichtung der Vorrichtung gemäß Fig. 2,
Fig. 5 eine Draufsicht auf die Räumeinrichtung der erfindungsgemäßen Vorrichtung,
Fig. 6 eine Seitenansicht eines Räumschildes der Räumeinrichtung gemäß Fig. 5,
Fig. 7 eine Vorderansicht des Räumschildes gemäß Fig. 6,
Fig. 8 eine Draufsicht auf den Räumschild gemäß den Fig. 6 und 7,
Fig. 9 eine vergrößerte und detailliertere Ansicht des Bereiches des Arbeitsorganes einer einer erfindungsgemäßen Vorrichtung bei Arbeitsstellung des Arbeitsorganes,
Fig. 10 den Bereich gemäß Fig. 9 bei angehobener Stellung des Arbeitsorganes,
Fig. 11 einen vergrößerten Ausschnitt eines Endbereiches des Arbeitsorganes der erfindungsgemäßen Vorrichtung und
Fig. 12 den Bereich gemäß der Fig. 11 in einer anderen Schnittansicht entlang der in Fig. 11 mit XII,XII bezeichneten strichpunktierten Linie.

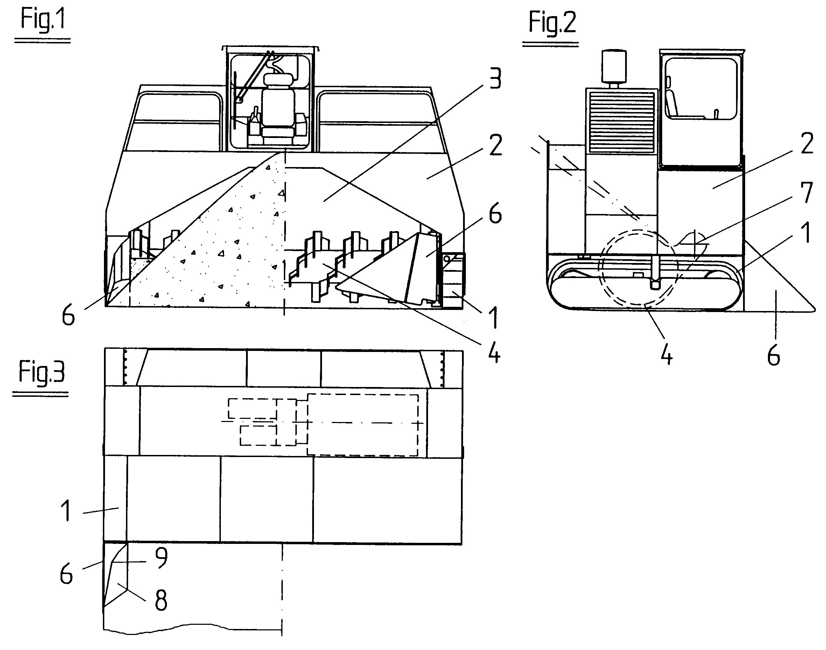

Die Figuren 1 bis 3 zeigen drei Ansichten einer schematischen Darstellung einer erfindungsgemäßen Vorrichtung.

Die Vorrichtung ist auf zwei Fahrketten bzw. Antriebsketten 1 eines Fahrwerkes verfahrbar. Der eigentliche Vorrichtungsaufbau 2 überspannt den Zwischenraum zwischen den beiden von den Antriebsketten 1 gebildeten Fahrspuren brückenartig bzw. torartig unter Freilassung eines Durchlauftunnels 3, der durch die gesamte Vorrichtung zwischen den beiden Antriebsketten 1 verläuft. Diesen Durchlauftunnel 3 versperrend, ist ein im wesentlichen walzenförmig ausgebildetes, mit Arbeitswerkzeugen bestücktes Arbeitsorgan 4, welches rotierend antreibbar ist, zwischen den beiden Antriebsketten 1 angeordnet.

Die Vorrichtung weist außerdem ein Führerhaus 5 auf. Den beiden Antriebsketten 1 vorgelagert sind jeweils Räumschilde 6.

Die in den Figuren 1 bis 3 dargestellte Vorrichtung dient insbesondere zum Umsetzen bzw. Durcharbeiten von wallartigen Anhäufungen (Mieten) von kompostierbarem Material. Dazu fährt die Vorrichtung auf den Antriebsketten so entlang einer solchen wallartigen Anhäufung, daß die Antriebsketten 1 links und rechts neben der Anhäufung verfahren werden, während sich das Arbeitsorgan 4 durch das Material der Anhäufung durcharbeitet. Dabei kann beim Verfahren der Vorrichtung die wallartige Anhäufung durch den Durchgangstunnel 3 verlaufen. Der Durchgangstunnel 3 hat dafür ein Profil, das etwa dem Querschnittsprofil einer solchen wallartigen Anhäufung entspricht, die natürlich in ihrem Querschnitt etwas glockiger ausgebildet ist. Mit dem Arbeitsorgan 4 wird das Material der Anhäufung durchgearbeitet, aufgewirbelt, hochgeschleudert und auch eine Strecke weit entgegen der Fahrtrichtung zurückgeschleudert, so daß eine solche wallartige Anhäufung nach der Durcharbeitung um eine bestimmte Strecke in Längsrichtung nach hinten versetzt angeordnet ist.

Die Räumschilde 6 dienen dazu, die Fahrspuren der Antriebsketten 1 freizuhalten und in diesem Bereich eventuell vorhandenes Material zwangsweise in den Zwischenraum zwischen die Fahrspuren, also auf die wallartige Anhäufung, zu schieben.

Aus den Figuren 1 bis 3 ist bereits erkennbar, daß die Räumschilde 6 von einer in Fahrtrichtung weisenden Arbeitsstellung in eine Ruhestellung eingeschwenkt werden können, in der sie jeweils quer zur Fahrtrichtung stehen un in den Zwischenraum zwischen die Fahrspuren der Antriebsketten 1 weisen. In dieser Ruhestellung sind sie außerdem um einen Anstellwinkel angehoben. Auch das Arbeitsorgan 4 ist durch Verschwenkung um eine Schwenkachse 7 anhebbar. Außerdem ist aus der Fig. 3 erkennbar, daß jeder Räumschild eine schaufelartige Rampe 8 aufweist, die zu ihrer Vorderseite hin zugespitzt verläuft, um sich in eventuelles Material einzugraben. Begrenzt wird diese Rampe an der Außenseite und der Rückseite der Rampe 8 von einer im wesentlichen gebogen verlaufenden Führungsfläche 9, die das Material in den Zwischenraum zwischen den Fahrspuren der Antriebsketten 1 leitet.

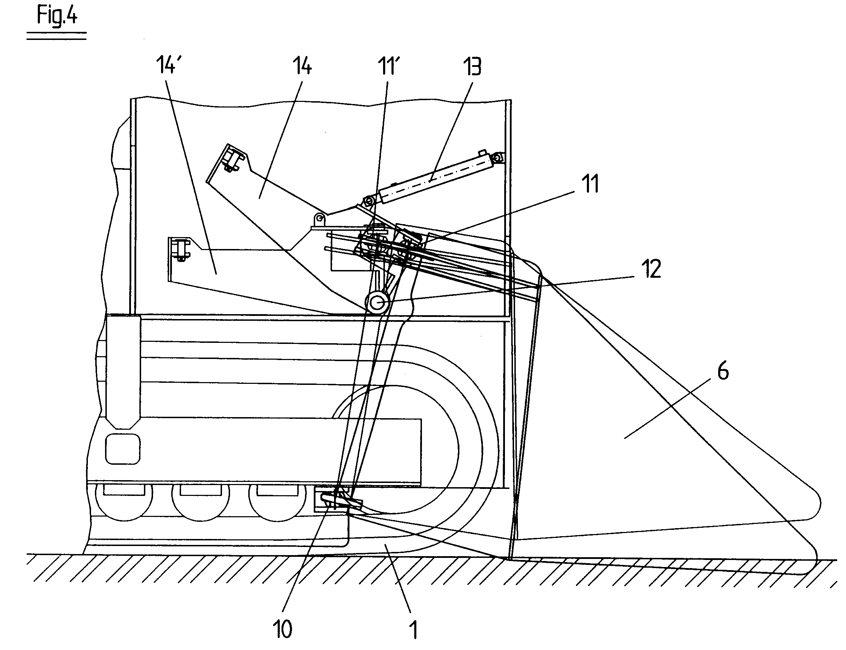

Die Fig. 4 zeigt detaillierter vom Zwischenraum zwischen den Fahrspuren der Antriebsketten 1 aus gesehen die Räumeinrichtung vor einer der Antriebsketten 1, die ein Räumschild 6 umfaßt. Bezüglich dieses Räumschildes 6 zeigt die Fig. 4 eine Bewegungsstudie.

Der Räumschild 6 ist in die Ruhestellung um Anlenkpunkte 10 und 11 einschwenkbar, die zusammen eine zur Lotrechten geneigte Schwenkachsenwirklinie für den Räumschild 6 festlegen, so daß der Räumschild 6 um diese Anlenkpunkte 10, 11 nicht nur einschwenkbar ist, sondern gleichzeitig um einen Anstellwinkel angehoben wird. Verschwenkt wird der Räumschild 6 mittels eines Hydraulikzylinders, der in dieser Fig. 4 nicht erkennbar ist.

Außerdem ist aber der Anlenkpunkt 11 um einen Schwenkzapfen 12 bezüglich des Anlenkpunktes 10, der als Kugelgelenk ausgebildet ist, in eine Position 11' verschwenkbar, und zwar mittels eines Hydraulikzylinders 13. Dadurch ist auch der in Fahrtrichtung weisende Räumschild somit um einen Anstellwinkel um den Schwenkzapfen 12 anhebbar, um eventuelle Hindernisse überfahren zu können. Eine Rückstellkraft kann dafür sorgen, daß der Räumschild 6 federnd wieder in seine Arbeitsposition zurückkehrt. Dazu ist es beispielsweise möglich, den Hydraulikzylinder 13 einmal in Betätigungsbereitschaft zu halten, einmal aber auch in Schwimmstellung zu bringen.

Aus der Fig. 4 ist weiterhin erkennbar, daß insbesondere der untere Anlenkpunkt 10 innerhalb der Umschlingung der Antriebskette 1 untergebracht ist, während sich der obere Anlenkpunkt 11, der Schwenkzapfen 12 und eine Hilfskonstruktion 14, an der der Hydraulikzylinder 13 zum Verschwenken des Räumschildes 6 angreift, oberhalb der Antriebskette 1 angeordnet sind, aber in der lotrechten Ebene der Antriebskette 1.

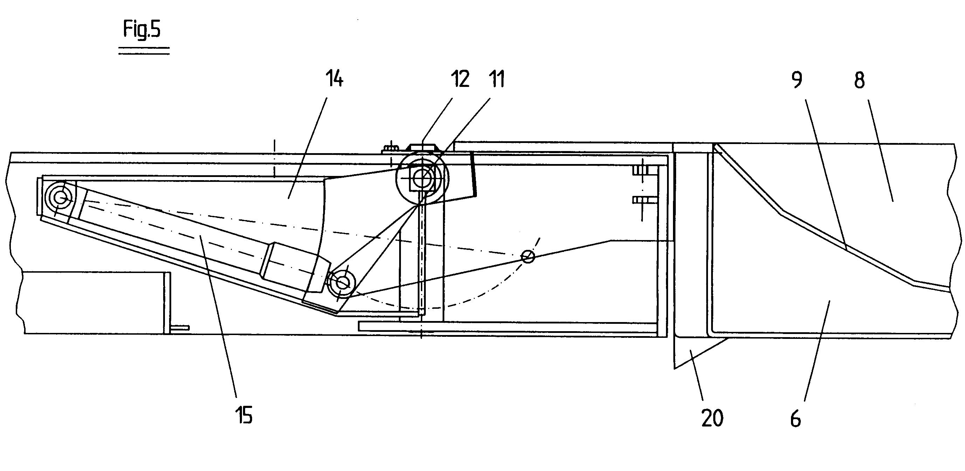

Fig. 5 zeigt eine Draufsicht auf die Räumeinrichtung gemäß Fig. 4. In dieser Draufsicht ist der Hydraulikzylinder 15 zu erkennen, der zur Einschwenkung und Ausschwenkung des Räumschildes 6 dient.

Außerdem ist in dieser Fig. 5 zu erkennen, daß tatsächlich die gesamte Räumeinrichtung in derselben Ebene liegt wie die Antriebskette 1, die ausreichend Platz hat, zwischen dem Räumschild 6 und der Hilfskonstruktion 14 durchzulaufen.

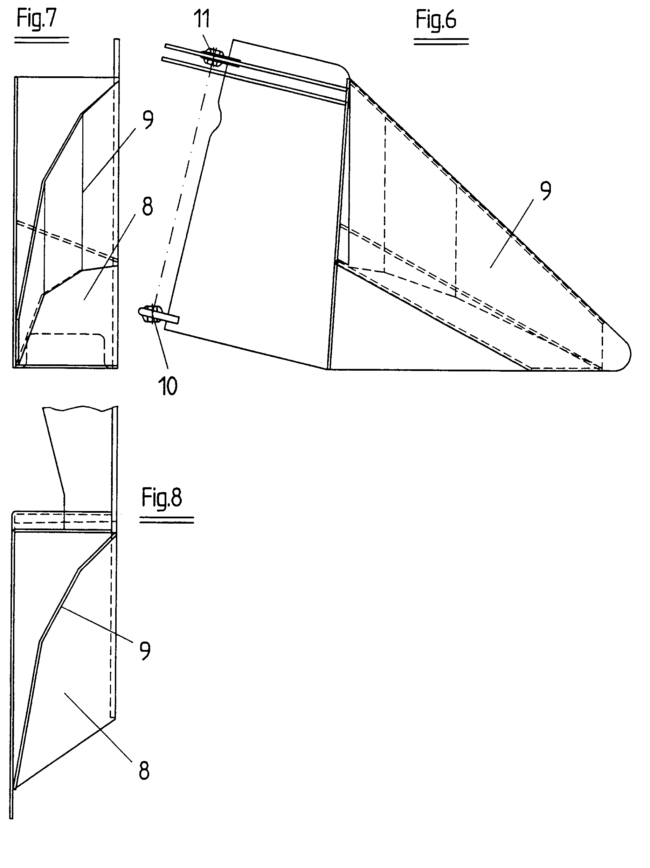

Die Figuren 6 bis 8 zeigen noch einmal detaillierter einen Räumschild 6 selbst. Insbesondere ist aus diesen Figuren zu erkennen, daß die Führungsfläche 9 aus ebenen Teilbereichen zusammengesetzt ist, die dem Verlauf eines Vieleckes folgen und dadurch insgesamt im wesentlichen einen Bogenverlauf, wenn auch einen eckigen Bogenverlauf, nehmen.

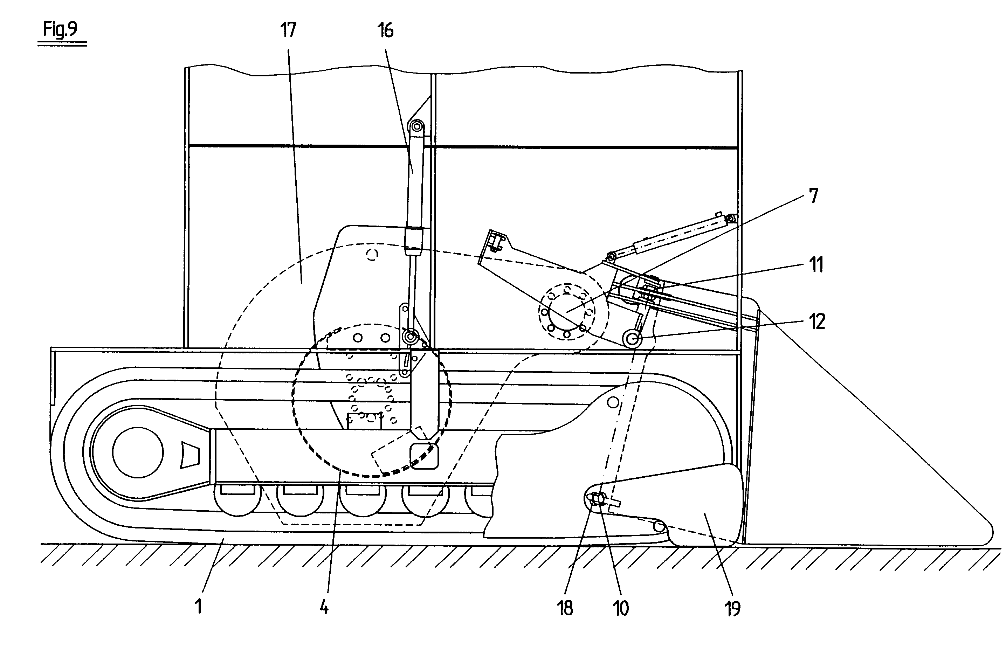

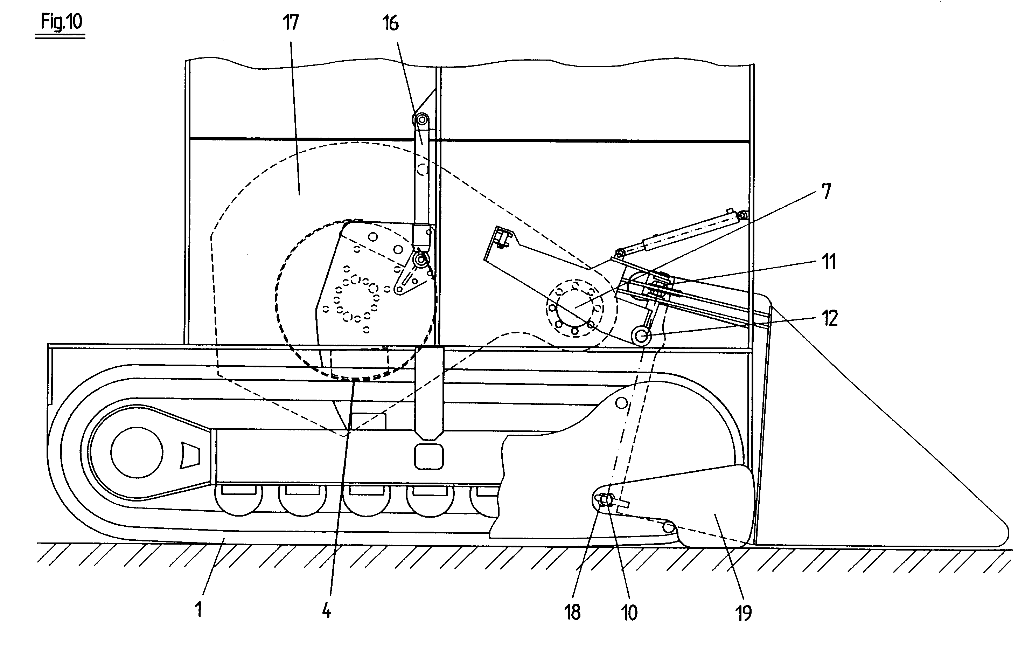

Die Figuren 9 und 10 lassen detaillierter erkennen, daß das Arbeitsorgan 4 um eine Schwenkachse 7 verschwenkbar und dadurch anhebbar und absenkbar ist, und zwar mit Hilfe eines Arbeitszylinders 16.

Die abgesenkte Stellung des Arbeitsorganes 4 der Fig. 9 ist die Arbeitsstellung. In der von dem Rohrmantel des Arbeitsorganes 4 eingeschlossenen Kreisfläche sind in der Fig. 9 einige Bohrungen angedeutet, die zum Teil Befestigungsschrauben zur Befestigung des Arbeitsorganes 4 an Schwingen 17 zur Verschwenkung des Arbeitsorganes um die Schwenkachse 7 symbolisieren, zum Teil aber auch druckmittelleitende Kanäle für eine Druckmittelzufuhr zu einem Druckmittel antrieb im Inneren des Arbeitsorganes 4 andeuten. Aus der Fig. 9 ist zu erkennen, daß auch in Arbeitsstellung des Arbeitsorganes 4 die obersten Kreissymbole, die Druckmittelanschlüsse symbolisieren, oberhalb der Umschlingung der Antriebskette 1 liegen, aber innerhalb des Umfanges des Arbeitsorganes 4.

Außerdem ist in den Figuren 9 und 10 ein um eine Schenkachse 18 anhebbares Schwert 19 zu erkennen, das als Widerlager für den ausgeschwenkten Räumschild 6 wirkt und mit dem in Fig. 5 angedeuteten Anschlag 10 des Räumschildes 6 dementsprechend zusammenwirkt.

Die Schwenkachse 18 des Schwertes 19 liegt auf einer Linie mit dem unteren Anlenkpunkt 10 des Räumschildes 6.

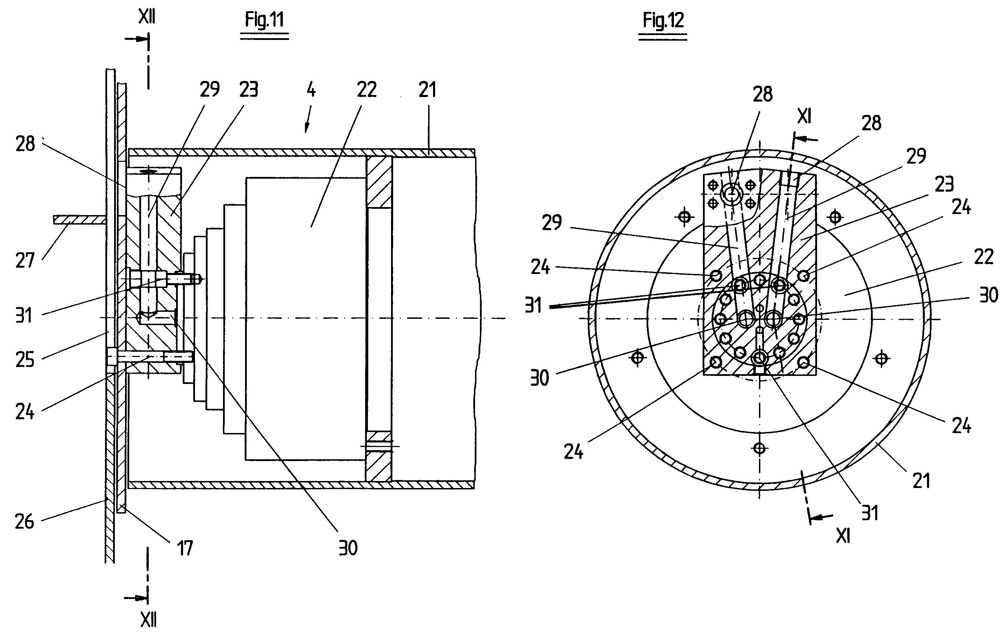

Die Lageverhältnisse der in den Figuren 9 und 10 nur symbolisch angedeuteten Bohrungenen in der Stirnfläche des Antriebsorganes 4 sind in den Figuren 11 und 12 näher dargestellt.

Fig. 11 zeigt einen Endbereich des Arbeitsorganes 4, wobei die eigentlichen Arbeitswerkzeuge in der Darstellung fortgelassen sind.

Das Arbeitsorgan weist ein Mantelrohr 21 auf. In diesem Mantelrohr 21 befindet sich ein nicht näher dargestellter Druckmittelantrieb 22, der antriebsmäßig mit dem Mantelrohr 21 verbunden ist. Die stehende Welle des Druckmittelsntriebes 22 ist über einen Befestigungsflansch 23 mit einer Schwinge 17 verbunden. Befestigungsschrauben 24 zur Befestigung des Befestigungsflansches 23 an der Schwinge 17 können von der Außenseite her, durch eine Ausnehmung 25 im Vorrichtungsrahmen 26 montiert werden.

Innerhalb der Stirnfläche des Mantelrohres 21 befinden sich oberhalb einer Abdeckung 27 für die Antriebskette 1 nur schematisch angedeutete Druckmittelanschlüsse 28 für den Druckmittelantrieb 22. Vom Bereich dieser Druckmittelanschlüsse 28 führen Druckmittelkanäle 29 innerhalb des Befestigungsflansches 23 zu Zuleitungen bzw. Ableitungen 30 des Druckmittelantriebes 22. Die Druckmittelkanäle 29 sind wenigstens teilweise als Bohrungen ausgeführt. Zum Teil werden diese Bohrungen mitgenutzt für Befestigungsschrauben 31 zur Befestigung des Befestigungsflansches 23 an dem Druckmittelantrieb 22 bzw. dessen feststehender Welle.

Die Fig. 12 zeigt eine Stirnansicht des Arbeitsorganes 4, allerdings reduziert auf das Mantelrohr 21 und den Befestigungsflansch 23. Gleiche Bauelemente sind mit den gleichen Bezugszahlen bezeichnet wie in Fig. 11.

## Patentansprüche

1. Verfahrbare Vorrichtung zur Durcharbeitung und/oder Umsetzung von vorzugsweise wallartig aufgeschütteten Anhäufungen von kompostierbaren Materialen z.B. Mieten oder von deponierbaren Materjalien, insbesondere zur organischen Aufbereitung, umfassend ein auf zwei Fahrspuren verfahrbares Fahrwerk, ein im wesentlichen quer zur Fahrtrichtung innerhalb des Spurzwischenraumes zwischen den Fahrspuren des Fahrwerkes, innerhalb eines Durchlauftunnels für das Material angeordnetes, vorzugsweise rotierend antreibbares Arbeitsorgan und zwei den beiden Fahrspuren des Fahrwerkes in Fahztrichtung vorgelagerte, etwa die Breite der jeweiligen Fahrspur einnehmende, vor den Fahrspuren befindliches Material in den Spurzwischenraum zwingende Räumeinzichtung für z.B. Fahrspuren, wobei jede einen Schild (6) umfassende Räumeinrichtung von einer etwa in Fahrtrichtung weisenden Arbeitsstellung in eine Ruhestellung etwa quer zur Fahrtrichtung verschwenkbar und auch anhebbar ist,
dadurch gekennzeichnet,
daß jeder als Räumschild (6) ausgebildete Schild in eine Ruhestellung in den Zwischenraum zwischen den Fahrspuren verschwenkbar ist und dadurch gleichzeitig in die Ruhestellung verschwenkbar und anhebbar ist, daß er beim Verschwenken um einen Winkel bezüglich des Erdbodens derart anstellbar ist, daß er in Richtung seines freien Endes aufragt.

2. Vorrichtung nach Anspruch 1, dadurch gekennzeichnet, daß dieser Räumschild (6) um eine gegenüber der Lotrechten in Fahrtrichtung geneigte Schwenkachsenwirklinie verschwenkbar ist.

3. Vorrichtung nach Anspruch 1 oder 2, dadurch gekennzeichnet, daß der Räumschild (6) bei in Fahrtrichtung weisender Stellung zur Überwindung von Hindernissen in einen Anstellwinkel anhebbar ist, indem er um eine quer zur Fahrtrichtung verlaufende Achswirklinie, einen Schwenkzapfen (12), verschwenkbar ist.

4. Vorrichtung nach Anspruch 2 und 3, dadurch gekennzeichnet, daß die gegenüber der Lotrechten geneigte Schwenkachsenwirklinie zur Ermöglichung des Anhebens des in Fahrtrichtung weisenden Räumschildes (6) in eine lotrechtere Stellung verbringbar ist.

5. Vorrichtung nach Anspruch 4, dadurch gekennzeichnet, daß die gegenüber der Lotrechten geneigte Schwenkachsenwirklinie durch zwei miteinander unverbundene Anlenkpunkte (10,11) festgelegt ist, von denen ein Anlenkpunkt, vorzugsweise der obere Anlenkpunkt (11), bezüglich des anderen Anlenkpunktes, vorzugsweise des unteren Anlenkpunktes (10), auf einem Bogen bewegbar ist.

6. Vorrichtung nach Anspruch 5, dadurch gekennzeichnet, daß der festliegende Anlenkpunkt (10) als Kugelgelenk ausgebildet ist.

7. Vorrichtung nach einem der Ansprüche 3 bis 6, dadurch gekennzeichnet, daß der Räumschild (6) gegen eine Rückstellfederkraft anhebbar ist.

8. Vorrichtung nach Anspruch 2 und 3, dadurch gekennzeichnet, daß zur jeweiligen Verschwenkbarkeit des Räumschildes (6) jeweils ein Arbeitszylinder (13,15) vorgesehen ist.

9. Vorrichtung nach einem oder mehreren der vorhergehenden Ansprüche, dadurch gekennzeichnet, daß die Organe und Elemente (13,15) zur Betätigung und Anlenkung des Räumschildes im wesentlichen in der lotrechten Ebene der jeweils zugeordneten Fahrspur sind.

10. Vorrichtung nach Anspruch 9, dadurch gekennzeichnet, daß das Fahrwerk für jede Fahrspur eine Antriebskette (1) aufweist und daß die Organe und Elemente zur Betätigung und Anlenkung des zugeordneten Räumschildes (6) wenigstens teilweise im wesentlichen innerhalb des Umschlingungsbereiches der Antriebskette (1) untergebracht sind.

11. Vorrichtung nach Anspruch 10, dadurch gekennzeichnet, daß jede der beiden Antriebsketten (1) jeweils Kettenbelege aufweist, die beidseitig über die jeweilige Kettenbreite überstehen, und daß die Organe des dieser Antriebskette vorgeordneten Räumschildes (6) wenigstens zum Teil, im Umschlingungsbereich des einwärts in den Fahrspurzwischenraum weisenden Überstandes der Kettenbelege untergebracht sind.

12. Vorrichtung nach Anspruch 5 und 10 oder 11, dadurch gekennzeichnet, daß der untere Anlenkpunkt (10) zur Festlegung der Schwenkachsenwirklinie des Räumschildes (6) innerhalb der Umschlingung der zugeordneten Antriebskette (1) angeordnet ist, während der obere Anlenkpunkt (11) oberhalb der Umschlingung angeordnet ist.

13. Vorrichtung nach einem oder mehreren der vorhergehenden Ansprüche, gekennzeichnet durch ein Widerlager für jeden der beiden in Fahrtrichtung und Arbeitsrichtung geschwenkten Räumschilde (6) zur Begrenzung des jeweiligen Schwenkweges und zur Verhinderung eines Ausscherens des jeweiligen Räumschildes (6) aus der Fahrspur unter Räumbelastung.

14. Vorrichtung nach Anspruch 13, dadurch gekennzeichnet, daß jedes Widerlager als an der Seitenwandung der Vorrichtung in Fahrtrichtung hinter dem zugeordneten Räumschild (6) angeordnetes, in Fahrtrichtung weisendes Schwert (19) ausgebildet ist.

15. Vorrichtung nach Anspruch 3 und 14, dadurch gekennzeichnet, daß das Schwert (19) um dieselbe horizontale, quer zur Fahrtrichtung verlaufende Achswirklinie (10,18) zum Überqueren von Hindernissen anhebbar ist, wie der zugeordnete Räumschild (6).

16. Vorrichtung nach Anspruch 14 oder 15, dadurch gekennzeichnet, daß der jeweilige Räumschild (6) zur Anlage an das zugeordnete Schwert (19) an seiner Außenseite eine Anschlagsverbreiterung (20) aufweist.

17. Vorrichtung nach einem oder mehreren der vorhergehenden Ansprüche, dadurch gekennzeichnet, daß jeder Räumschild (6) eine von seinem freien vorderen Ende nach hinten ansteigende, schaufelartige Rampe (9) zum Anheben des zu räumenden Materials aufweist, die an ihrer Vorderseite und an ihrer Innenseite offen ist und an ihrer Außenseite und an ihrer Rückseite von einer in ihrem Verlauf von der Außenseite der Rampe (8) im wesentlichen in einem Bogen in eine an der Rückseite quer verlaufende, in den Fahrspurzwischenraum weisenden und führenden Führungsfläche (9) für das Material begrenzt ist.

18. Vorrichtung nach Anspruch 17, dadurch gekennzeichnet, daß der Bogenverlauf der Führungsfläche (9) durch gerade bzw. ebene, aneinander winkelig angesetzte, dem Verlauf eines Vieleckes folgende Teilführungsabschnitte verwirklicht ist.

19. Vorrichtung nach Anspruch 17 oder 18, dadurch gekennzeichnet, daß die Rampe (8) des Räumschildes (6) an ihrer Vorderseite derart abgeschrägt ist, daß sie zu ihrer Außenseite hin zugespitzt ist.

20. Verfahrbare Vorrichtung zur Durcharbeitung und/oder Umsetzung von vorzugsweise wallartig aufgeschütteten Anhäufungen von kompostierbaren Materialien z.B. Mieten oder von deponierbaren Materialien, insbesondere zur organischen Aufbereitung, umfassend ein auf zwei Fahrspuren verfahrbares Fahrwerk, ein im wesentlichen quer zur Fahrtrichtung innerhalb des Spurzwischenraumes zwischen den Fahrspuren des Fahrwerkes, innerhalb eines Durchlauftunnels für das Material angeordnetes, vorzugsweise rotierend antreibbares Argeitsorgan, nach einem oder mehreren der vorhergehenden Ansprüche,
dadurch gekennzeichnet,
daß das rotierende antreibbare Arbeitsorgan (4) im wesentlichen ein rotierend antreibbares Mantelrohr (21) umfaßt, an dessen Außenseite die Arbeitswerkzeug angeordnet sind und in dessen Innern koaxial ein Druckmittelantrieb (22) mit feststehender Welle und rotierendem, das Mantelrohr (21) antreibenden Gehäuse untergebracht ist.

21. Vorrichtung nach Anspruch 20, dadurch gekennzeichnet, daß das Arbeitsorgan (14) eine Arbeitsstellung auf Fahrwerksniveau aufweist, wobei der Radius des Mantelrohres (21) so gewählt ist, daß es das Fahrwerk, vorzugsweise die Umschlingungsbereiche von Antriebsketten (1), nach oben überragt, und daß der Anschlußbereich (28) für die Druckmittelversorgung des im Mantelrohr (21) untergebrachten Druckmittelantriebs (22) in Höhe des Bereiches einer Stirnfläche des Mantelrohres angeordnet ist, der oberhalb des Fahrwerkes liegt.

22. Vorrichtung nach Anspruch 21, gekennzeichnet durch im Innern des Mantelrohres (21) als Stirnflächen angeordnete Befestigungsflansche (23) zur Befestigung des Arbeitsorganes (4) an der Vorrichtung, von denen wenigstens einer der Befestigungsflansch (23) wenigstens einen Druckmittelkanal (29) aufweist, der einen oberhalb des Fahrwerkes befindlichen Druckmittelanschluß (28) mit einer im Mantelrohr (21) etwa axial angeordneten Druckmittelzuleitung (30) des Druckmittelantriebes (22) druckmittelleitend verbindet.

23. Vorrichtung nach Anspruch 22, dadurch gekennzeichnet, daß mehrere Druckmittelkanalabschnitte als Bohrungen ausgeführt sind und axial verlaufende Bereiche als Schraubenlöcher für Befestigungsschrauben (31) zur Befestigung das Befestigungsflansches (23) am Druckmittelantrieb (22) (mit-)genutzt sind.

24. Vorrichtung nach einem oder mehreren der Ansprüche 20 bis 23, dadurch gekennzeichnet, daß das Arbeitsorgan (4) aus seiner Arbeitsstellung anhebbar ist.

25. Vorrichtung nach Anspruch 24, dadurch gekennzeichnet, daß das Arbeitsorgan (4) zwischen zwei im Bereich der Fahrspuren befindlichen Schwingen (17) angeordnet ist, mit denen es um eine horizontale, zur Fahrtrichtung quer verlaufende Achse (7) verschwenkbar ist.

26. Vorrichtung nach Anspruch 22 oder 23 und 25, dadurch gekennzeichnet, daß die Befestigungsflansche (23) zur Befestigung des Arbeitsorganes (4) an den Schwingen (17) vorgesehen sind.

27. Vorrichtung nach Anspruch 26, dadurch gekennzeichnet, daß die innenliegenden Seitenwandungen eines Vorrichtungsrahmens (26) im Bereich der Befestigungsflansche (23) Ausnehmungen (25) zur Montierung von Befestigungsschrauben (24) zur Befestigung der Befestigungsflansche (23) an den Schwingen (17) von außen durch die Schwingen (17) hindurch aufweisen.

## Claims

1. Mobile device for working and/or moving heaps, preferably stacked in the manner of an embankment, of compostable materials, e.g. ricks, or of materials which are suitable for a landfill, in particular for organic processing, comprising travelling gear which can be moved on two tracks, an implement which can preferably be driven in a rotating fashion and is arranged essentially transversely with respect to the direction of travel within the space between the tracks of the travelling gear and within a tunnel for the material to pass through, and two clearing devices for e.g. tracks, which are arranged in front of the two tracks of the travelling gear in the direction of travel, take up approximately the width of the respective track and force the material located in front of the tracks into the space between the tracks, each clearing device comprising a blade (6) which is capable of being pivoted and also raised from a working position pointing approximately in the direction of travel into a position of rest approximately transverse with respect to the direction of travel
**characterized** in
that each blade, realized as a clearing blade (6), can be pivoted into a position of rest into the space between the tracks and can be simultaneously pivoted and raised into the position of rest by virtue of the fact that during pivoting it can be adjusted by an angle relative to the ground such that it projects upwards in the direction of its free end.

2. Device according to claim 1, characterized in that this clearing blade (6) can be pivoted about a pivot-axis line of action which is inclined with respect to the vertical in the direction of travel.

3. Device according to claim 1 or 2, characterized in that, when it is in a position pointing in the direction of travel, the clearing blade (6) can be raised to an adjustment angle in order to overcome obstacles in that it can be pivoted about an axial line of action, a pivot spindle (12), running transversely with respect to the direction of travel.

4. Device according to claims 2 and 3, characterized in that the pivot-axis line of action which is inclined with respect to the vertical can be moved into a more vertical position in order to permit the clearing blade (6) which points in the direction of travel to be raised.

5. Device according to claim 4, characterized in that the pivot-axis line of action which is inclined with respect to the vertical is defined by two coupling points (10,11) which are not connected to one another, one coupling point, preferably the upper coupling point (11), of which can be moved with respect to the other coupling point, preferably the lower coupling point (10), over an arc.

6. Device according to claim 5, characterized in that the fixed coupling point (10) is realized as a ball-and-socket joint.

7. Device according to one of Claims 3 to 6, characterized in that the clearing blade (6) can be raised counter to a restoring spring force.

8. Device according to Claims 2 and 3, characterized in that in each case one working cylinder (13, 15) is provided in order to enable the clearing blade (6) to pivot respectively.

9. Device according to one more of the preceding claims, characterized in that the elements (13, 15) for activating and coupling the clearing blade are essentially in the vertical plane of the respectively associated track.

10. Device according to Claim 9, characterized in that the travelling gear has a driving chain (1) for each track, and in that at least some of the elements for activating and coupling the associated clearing blade (6) are accommodated essentially within the wrap area of the driving chain (1).

11. Device according to Claim 10, characterized in that each of the two driving chains (1) has in each case chain covers which protrude on both sides beyond the respective chain width, and in that at least some of the elements of the clearing blade (6) arranged in front of this driving chain are accommodated in the wrap area of the protruding length of the chain covers which points inwards into the space between the tracks.

12. Device according to Claims 5 and 10 or 11, characterized in that, in order to define the pivot-axis line of action of the clearing blade (6), the lower coupling point (10) is arranged within the wrap of the associated driving chain (1), while the upper coupling point (11) is arranged above the wrap.

13. Device according to one or more of the preceding claims, characterized by a counter-bearing for each of the two clearing blades (6) which are pivoted in the direction of travel and in the working direction, in order to limit the respective pivoting travel and in order to prevent the respective clearing blade (6) from being deflected out of the track under clearing load.

14. Device according to Claim 13, characterized in that each counter-bearing is realised as a bracing element which is arranged on the side wall of the device behind the associated clearing blade (6) in the direction of travel and points in the direction of travel.

15. Device according to Claims 3 and 14, characterized in that the bracing element (19) can be raised about the same horizontal axial line of action (10, 18), running transversely with respect to the direction of travel, as the associated clearing blade (6) in order to traverse obstacles.

16. Device according to Claim 14 or 15, characterized in that, for bearing against the associated bracing element (19), the respective clearing blade (6) has a stop extension (20) on its outside.

17. Device according to one or more of the preceding claims, characterized in that, in order to raise the material to be cleared, each clearing blade (6) has a shovel-like slope (8) which rises from its front end to the rear, is open at its front and on its inside and is bounded on its outside and at its rear by a guide face (9) for the material, which guide face (9) runs in its course from the outside of the slope (8) essentially in an arc into a transversal direction at the rear and points and leads into the space between the tracks.

18. Device according to Claim 17, characterized in that the arcuate course of the guide face (9) is realised by straight and planar partial guide sections which are joined to one another at an angle and follow the course of a polygon.

19. Device according to Claim 17 or 18, characterized in that the slope (8) of the clearing blade (6) is bevelled at its front in such a way that it tapers to a point towards its outside.

20. Mobile device for working and/or moving heaps, preferably stacked in the manner of an embankment, of compostable materials, e.g. ricks, or of materials which are suitable for a landfill, in particular for organic processing, comprising travelling gear which can be moved on two tracks, an implement which can preferably be driven in a rotating fashion and is arranged essentially transversely with respect to the direction of travel within the space between the tracks of the travelling gear and within a tunnel for the material to pass through, according to one or more of the preceding claims
**characterized** in
that the implement (4) which can be driven in a rotating fashion comprises essentially a casing tube (21) which can be driven in a rotating fashion and on the outside of which the tools are arranged and in the interior of which a pressure medium drive (22) with a fixed shaft and a rotating housing which drives the casing tube (21) is accommodated.

21. Device according to Claim 20, characterized in that the implement (4) has a working position level with the travelling gear, the radius of the casing tube (21) being selected such that it projects upwards beyond the travelling gear, preferably beyond the wrap areas of driving chains (1), and in that the connection area (28) for the pressure medium supply of the pressure medium drive (22) which is accommodated in the casing tube (21) is arranged level with that the area of an end face of the casing tube which is located above the travelling gear.

22. Device according to Claim 21, characterized by attachment flanges (23), arranged in the interior of the casing tube (21) as end faces, for attaching the implement (4)to the device, at least one of which attachment flanges (23) has at least one pressure medium passage (29) which connects, in a pressure medium-conducting fashion, a pressure medium connection (28), which is located above the travelling gear, to a pressure medium feed line (30), arranged approximately axially in the casing tube (21), of the pressure medium drive (22).

23. Device according to Claim 22, characterized in that a plurality of pressure medium passage sections are designed as holes and axially running areas are used as screw holes for attachment screws (31) for attaching the attachment flange (23) to the pressure medium drive (22).

24. Device according to one or more of Claims 20 to 23, characterized in that the implement (4) can be raised out of its working position.

25. Device according to Claim 24, characterized in that the implement (4) is arranged between two rockers (17) which are located in the region of the tracks and with which the said implement (4) can be pivoted about a horizontal axis (7) which runs transversely with respect to the direction of travel.

26. Device according to Claims 22 or 23 and 25, characterized in that the attachment flanges (23) are provided for attaching the implement (4) to the rockers (17).

27. Device according to Claim 26, characterized in that the internal side walls of a device frame (26) have, in the region of the attachment flanges (23), recesses (25) for mounting attachment screws (24) for attaching the attachment flanges (23) to the rockers (17) from the outside through the rockers (17).

## Revendications

1. Dispositif déplaçable pour le malaxage et/ou le transfert de tas, déversés de préférence à la manière de remblais, de matériaux compostables, par exemple de meules ou de matériaux de décharges, en particulier pour le traitement organique, comportant un mécanisme de roulement déplaçable sur deux voies, un organe de travail, de préférence entraînable en rotation, disposé sensiblement transversalement à la direction de déplacement à l'intérieur de l'espace intermédiaire compris entre les voies du mécanisme de roulement, à l'intérieur d'un tunnel de passage pour le matériau ainsi que deux dispositif de déblayage,par exemple pour des voies, situés devant les deux voies du mécanisme de roulement, dans le sens de marche, occupant approximativement la largeur de la voie respective, repoussant le matériau se trouvant devant les voies dans l'espace compris entre les voies, chaque dispositif de déblayage comportant un bouclier (6), pouvant pivoter transversalement au sens de marche, d'une position de travail dirigée approximativement vers le sens de marche, dans une position de repos, et pouvant aussi être relevé, caractérisé en ce que chaque bouclier, conformé en tant que bouclier de déblayage (6), peut pivoter dans une position de repos, dans l'espace intermédiaire compris entre les voies et peut simultanément pivoter et être relevé dans la position de repos du fait que lors du pivotement il peut être incliné par rapport au sol d'un angle tel qu'il se dresse en direction de son extrémité libre.

2. Dispositif selon la revendication 1, caractérisé en ce que le bouclier de déblayage (6) peut pivoter autour d'une ligne d'action d'axe de pivotement, inclinée dans le sens de marche, par rapport à la verticale.

3. Dispositif selon la revendication 1 ou 2, caractérisé en ce que dans le cas où il se trouve dans une position dirigée dans le sens de marche, le bouclier de déblayage (6) peut être relevé d'un angle d'inclinaison pour surmonter des obstacles, en ce qu'il peut pivoter autour d'une ligne d'action d'axe, un axe de pivotement (12), s'étendant transversalement au sens de marche.

4. Dispositif selon les revendications 2 et 3, caractérisé en ce que la ligne d'action d'axe de pivotement, inclinée par rapport à la verticale, peut être amenée dans une position plus verticale, pour permettre le relèvement du bouclier de déblayage (6), dirigé dans le sens de marche.

5. Dispositif selon la revendication 4, caractérisé en ce que la ligne d'action d'axe de pivotement, inclinée par rapport à la verticale est définie par deux points d'articulation (10, 11), non liés entre eux, dont un point d'articulation, de préférence le point d'articulation supérieur (11), est déplaçable sur un arc, par rapport à l'autre point d'articulation, de préférence le point d'articulation inférieur (10).

6. Dispositif selon la revendication 5, caractérisé en ce que le point d'articulation (10) fixe est conformé en articulation sphérique.

7. Dispositif selon l'une des revendications 3 à 6, caractérisé en ce que le bouclier de déblayage (6) est relevable à l'encontre de la force d'un ressort de rappel.

8. Dispositif selon les revendications 2 et 3, caractérisé en ce que pour la possibilité respective de pivotement du bouclier de déblayage (6) il est prévu chaque fois un vérin (13, 15).

9. Dispositif selon une ou plusieurs des revendications précédentes, caractérisé en ce que les organes et éléments (13, 15) pour l'actionnement et l'articulation du bouclier de déblayage se trouvent sensiblement dans le plan vertical de la voie correspondante.

10. Dispositif selon la revendication 9, caractérisé en ce que le mécanisme de roulement comporte pour chaque voie une chaîne d'entraînement (1) et en ce que les organes et éléments pour l'actionnement et l'articulation du bouclier du déblayage (6) correspondants sont logés au moins en partie sensiblement à l'intérieur de la zone d'enroulement de la chaîne d'entraînement (1).

11. Dispositif selon la revendication 10, caractérisé en ce que chacune des deux chaînes d'entraînement (1) comporte des garnitures de chaîne qui dépassent des deux côtés de la largeur de chaîne respective, et en ce que les organes du bouclier de déblayage (6) situé en amont de cette chaîne d'entraînement, sont logés au moins en partie dans la zone du porte-à-faux des garnitures de chaîne dirigé vers l'intérieur dans l'espace compris entre les voies.

12. Dispositif selon les revendications 5 et 10 ou 11, caractérisé en ce que le point d'articulation inférieur (10) pour la définition de la ligne d'action d'axe de pivotement du bouclier de déblayage (6), est situé à l'intérieur de l'enroulement de la chaîne d'entraînement (1) correspondante, tandis que le point d'articulation supérieur (11) est situé au-dessus de l'enroulement.

13. Dispositif selon une ou plusieurs des revendications précédentes, caractérisé par une butée pour chacun des deux boucliers de déblayage (6), pivotés dans le sens de marche et le sens de travail pour limiter la distance de pivotement respective et pour empêcher un déboîtement du bouclier de déblayage (6) respectif hors de la voie, sous charge de déblayage.

14. Dispositif selon la revendication 13, caractérisé en ce que chaque butée est conformée en tant que lame (19) dirigée dans le sens de marche, disposée sur la paroi latérale du dispositif, derrière le bouclier de déblayage (6) correspondant, dans le sens de marche.

15. Dispositif selon les revendications 3 et 14, caractérisé en ce que la lame (19) est relevable autour de cette même ligne d'action d'axe (10, 18) horizontale, s'étendant transversalement au sens de marche, afin de traverser des obstacles, comme le bouclier de déblayage (6) correspondant.

16. Dispositif selon la revendication 14 ou 15, caractérisé en ce que le bouclier (6) respectif comporte sur son côté extérieur un élargissement de butée (20), en vue de l'application contre la lame (19) correspondante.

17. Dispositif selon une ou plusieurs des revendications précédentes, caractérisé en ce que chaque bouclier de déblayage (6) comporte, pour le relevage du matériau à déblayer, une rampe (9) du type d'une pelle, montant vers l'arrière à partir de son extrémité avant libre, qui est ouverte sur son côté avant et son côté intérieur et qui est limitée, sur son côté extérieur et son côté arrière, par une surface de guidage (9) pour le matériau, laquelle surface de guidage (9) s'étend dans son parcours depuis le côté extérieur de la rampe (8), sensiblement en arc, dans une direction transversale sur le côté arrière et est dirigée et guide vers l'espace compris entre les voies.

18. Dispositif selon la revendication 17, caractérisé en ce que le parcours en arc de la surface de guidage (9) est réalisé par des portions de guidage partielles droites ou planes, rapportées en angle les unes contre les autres, suivant le parcours d'un polygone.

19. Dispositif selon la revendication 17 ou 18, caractérisé en ce que la rampe (8) du bouclier de déblayage (6) est chanfreinée sur son côté avant, de manière à former une pointe vers son côté extérieur.

20. Dispositif déplaçable pour le malaxage et/ou le transfert de tas, déversés de préférence à la manière de remblais, de matériaux compostables, par exemple de meules ou de matériaux de décharges, en particulier pour le traitement organique comportant un mécanisme de roulement déplaçable sur deux voies, un organe de travail, de préférence entraînable en rotation, disposé sensiblement transversalement à la direction de déplacement à l'intérieur de l'espace intermédiaire compris entre les voies du mécanisme de roulement, à l'intérieur d'un tunnel de passage pour le matériau, selon une ou plusieurs des revendications précédentes, caractérisé en ce que l'organe de travail(4)pouvant être entraîné en rotation comprend essentiellement un tube d'enveloppe (21), pouvant être entraîné en rotation, sur le côté extérieur duquel sont disposés les outils de travail et à l'intérieur duquel est logé coaxialement un entraînement à fluide sous pression (22) avec arbre fixe et carter rotatif entraînant le tube d'enveloppe (21).

21. Dispositif selon la revendication 20, caractérisé en ce que l'organe de travail (14) présente une position de travail au niveau du mécanisme de roulement, le rayon du tube d'enveloppe (21) étant choisi de manière qu'il dépasse vers le haut du mécanisme de roulement, de préférence des zones d'enroulement des chaînes d'entraînement (1), et en ce que la zone de raccordement (28) pour l'alimentation en fluide sous pression de l'entraînement à fluide sous pression (22), logé dans le tube d'enveloppe (21), est disposée à hauteur de la zone d'une surface frontale du tube d'enveloppe, qui se situe au dessus du mécanisme de roulement.

22. Dispositif selon la revendication 21, caractérisé par des brides de fixation (23), disposées à l'intérieur du tube d'enveloppe (21), en tant que surfaces frontales, pour la fixation de l'organe de travail (4) sur le dispositif, dont au moins l'une des brides de fixation (23) présente au moins un canal de fluide sous pression (29) qui relie, de manière à acheminer le fluide sous pression, un raccord de fluide sous pression (28), se trouvant au dessus du mécanisme de roulement, à une conduite d'arrivée de fluide sous pression (30), disposée à peu près axialement dans le tube d' enveloppe (21), de l'entraînement à fluide sous pression (22).

23. Dispositif selon la revendication 22, caractérisé en ce que plusieurs tronçons de canal de fluide sous pression sont réalisés en tant que perçages et des zones s'étendant axialement sont utilisées (aussi) en tant que trous de vis pour des vis de fixation (31), en vue de la fixation de la bride de fixation (23) sur l'entraînement à fluide sous pression (22).

24. Dispositif selon une ou plusieurs des revendications 20 à 23, caractérisé en ce que l'organe de travail (4) est relevable à partir de sa position de travail.

25. Dispositif selon la revendication 24, caractérisé en ce que l'organe de travail (4) est disposé entre deux bras oscillants (17), se trouvant dans la région des voies, avec lesquels il peut pivoter autour d'un axe (7) horizontal, s'étendant transversalement au sens de marche.

26. Dispositif selon les revendications 22 ou 23 et 25, caractérisé en ce que les brides de fixation (23) sont prévues pour la fixation de l'organe de travail (4) sur les bras oscillants (17).

27. Dispositif selon la revendication 26, caractérisé en ce que les parois latérales, situées à l'intérieur, d'un cadre de dispositif (26), présentent, dans la région des brides de fixation (23), des évidements (25) pour le montage de vis de fixation (24), en vue de la fixation des brides de fixation (23) sur les bras oscillants (17), à partir de l'extérieur, à travers les bras oscillants (17).
